# EUROPÄISCHE PATENTANMELDUNG

(11) **EP 2 053 913 A2**
(43) Veröffentlichungstag der Anmeldung: **29.04.2009**
(21) Anmeldenummer: 08103815.0
(22) Anmeldetag: 05.05.2008
(51) Int. Cl.: H05K 13/00

(54) **Auswerten der Oberflächenstruktur von Bauelementen unter Verwendung von unterschiedlichen Präsentationswinkeln**

(30) Priorität: 11.06.2007 DE 102007026900
(71) Anmelder: SIEMENS AKTIENGESELLSCHAFT, 80333 München (DE)
(72) Erfinder: Besch, Karl-Heinz, 82140, Olching (DE); Hedrich, Matthias, 82515, Wolfratshausen (DE); Neumaier, Klaus, 81369, München (DE); Schnekenburger, Thomas, 86415, Mering (DE)
(74) Vertreter: Maier, Daniel Oliver

(57) **Zusammenfassung**

Diese Anmeldung beschreibt ein Verfahren zum optischen Vermessen der Oberflächenstruktur (111) eines Bauelements (110). Das Verfahren weist folgende Schritte auf: (a) Aussenden eines Beleuchtungslichts (102) in Richtung des Bauelements (110), (b) Abtasten des Bauelements (110) durch eine Relativbewegung (122) zwischen Bauelement (110) und Beleuchtungslicht (102), wobei das Bauelement (110) unter einem ersten Winkel beleuchtet wird und wobei ein Messlicht (107) aufgenommen wird, welches von dem Bauelement (110) zumindest teilweise auf einen Lichtdetektor (106) zurückgestreut wird, und, und (c) erneutes Abtasten des Bauelements (110) durch eine erneute Relativbewegung (122) zwischen Bauelement (110) und Beleuchtungslicht (102), wobei das Bauelement (110) unter einem zweiten Winkel beleuchtet wird, welcher unterschiedlich zu dem ersten Winkel ist, und wobei erneut ein Messlicht (107) aufgenommen wird, welches von dem Bauelement (110) zumindest teilweise auf den Lichtdetektor (106) zurückgestreut wird.

## Beschreibung

Auswerten der Oberflächenstruktur von Bauelementen unter Verwendung von unterschiedlichen Präsentationswinkeln

Die vorliegende Erfindung betrifft ein Verfahren zum optischen Auswerten der dreidimensionalen Oberflächenstruktur von elektronischen Bauelementen. Die Erfindung betrifft insbesondere ein Verfahren zum Vermessen der Koplanarität von Bauelementanschlüssen eines elektronischen Bauelements, welches Verfahren unmittelbar vor einem Bestückvorgang des Bauelements innerhalb eines Bestückautomaten durchgeführt werden kann. Die vorliegende Erfindung betrifft ferner eine optische Sensorvorrichtung sowie einen Bestückautomaten, welche zur Durchführung des erfindungsgemäßen Verfahrens zum optischen Auswerten der dreidimensionalen Oberflächenstruktur von elektronischen Bauelementen eingerichtet sind. Außerdem betrifft die Erfindung ein computerlesbares Speichermedium sowie ein Programm-Element, welche Instruktionen zur Durchführung des erfindungsgemäßen Verfahrens zum optischen Auswerten der dreidimensionalen Oberflächenstruktur von elektronischen Bauelementen enthalten.

Um den steigenden Anforderungen an die Zuverlässigkeit des Bestückprozesses von oberflächenmontierbaren Bauelementen (Surface Mounted Devices, SMD) gerecht zu werden, kontrolliert man zunehmend die Koplanarität hochpoliger Bauteile unmittelbar vor dem Bestückvorgang. Eine solche Prüfung muss in sehr kurzer Zeit durchgeführt werden können, um die Bestückleistung möglichst wenig zu beeinträchtigen. Die Koplanarität von bestimmten SMD-Bauelementen, wie beispielsweise so genannten Small Outline Packages (SOPs) oder Quad Flat Packages (QFPs), kann beispielsweise bestimmt werden, indem man sie mittels einer optischen Sensorvorrichtung vermisst, die auf dem bekannten Prinzip der Triangulation beruht.

Insbesondere sog. Laser-Triangulationssensoren eignen sich für eine genaue dreidimensionale Vermessung von elektronischen Bauelementen. Bei einem Laser-Triangulationssensor sind die Laserlichtquelle und der Lichtdetektor aus Sicht des zu vermessenden Objekts in einem bestimmten Winkel, dem Triangulationswinkel, zueinander angeordnet. Der Lichtdetektor misst einen diffusen Reflex der Laserlichtquelle beispielsweise auf den Anschlüssen des zu vermessenden Bauelements. Unterschiedliche Höhenlagen der auf diese Weise abgetasteten Objektpunkte führen dann im Lichtdetektor zu seitlichen Verschiebungen des aufgenommen Lichtreflexes.

Aus der EP 1 089 607 A2 ist eine Vorrichtung zum Vermessen der Koplanarität von Anschlüssen eines elektronischen Bauelements bekannt. Dabei wird ein Laserstrahl in Richtung der Bauelementanschlüsse ausgestrahlt. Das an den Bauelementanschlüssen gestreute Licht wird dann von einem lichtempfindlichen Sensor aufgenommen und analysiert.

In der Praxis zeigt sich, dass eine dreidimensionale Vermessung eines elektronischen Bauelements aus verschiedenen Gründen zu keinem gültigen Ergebnis führen kann. Ursachen für derartige Fehlmessungen können beispielsweise sein, dass infolge von Fehlstellen auf der zu vermessenden Bauelement-oberfläche die Reflexe undeutlich werden. Außerdem kann sich die zu vermessende Bauelementoberfläche außerhalb des Fokusbereiches des abtastenden Laserstahls befinden, so dass die zu vermessende Oberfläche von einem aufgeweiteten Laserstrahl getroffen wird.

Der vorliegenden Erfindung liegt die Aufgabe zugrunde, die Erkennungssicherheit bei der Auswertung der dreidimensionalen Oberflächenstruktur von elektronischen Bauelementen zu verbessern.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Mit dem unabhängigen Patentanspruch 1 wird ein Verfahren zum optischen Auswerten der dreidimensionalen Oberflächenstruktur eines elektronischen Bauelements beschrieben, welches insbesondere zum Vermessen der Koplanarität von Bauelementanschlüssen geeignet ist. Das beschriebene Verfahren weist auf (a) Aussenden eines von einer Lichtquelle erzeugten Beleuchtungslichts in Richtung des elektronischen Bauelements, (b) Abtasten des elektronischen Bauelements durch eine Relativbewegung zwischen dem Bauelement und dem Beleuchtungslicht, wobei das Bauelement unter einem ersten Winkel beleuchtet wird und wobei ein Messlicht aufgenommen wird, welches von dem Bauelement zumindest teilweise auf einen Lichtdetektor zurückgestreut wird, und (c) ein erneutes Abtasten des elektronischen Bauelements durch eine erneute Relativbewegung zwischen dem Bauelement und dem Beleuchtungslicht, wobei das Bauelement unter einem zweiten Winkel beleuchtet wird, welcher unterschiedlich zu dem ersten Winkel ist, und wobei erneut ein Messlicht aufgenommen wird, welches von dem Bauelement zumindest teilweise auf den Lichtdetektor zurückgestreut wird..

Dem beschriebenen Verfahren liegt die Erkenntnis zugrunde, dass beispielsweise bei einer Fehlmessung, welche entweder zu keinem gültigen Ergebnis oder zu einem nicht eindeutigen Ergebnis bezüglich der Oberflächenstruktur des vermessenen elektronischen Bauelements führt, eine erneute Bauelementabtastung unter einem anderen Präsentationswinkel in vielen Fällen zu einer gültigen dreidimensionale Oberflächenvermessung führt. Die Variation des Präsentationswinkels kann dabei nach einem vorab vorgegebenen Algorithmus erfolgen.

Die beschriebe erneute Bauelementabtastung kann beispielsweise auch dann erforderlich sein, wenn ein vorgegebener Qualitätswert bei der Bauelementerkennung über- oder unterschritten wird oder wenn eine Bauelementvermessung keine Übereinstimmung mit einer vorgegebenen Bauelementbeschreibung ergibt. Die Bauelementvermessung kann dabei eine vollständige Vermessung oder lediglich ein Teilvermessung des Bauelements umfassen. Mit einer Teilvermessung wird typischerweise lediglich ein bestimmter Abschnitt wie beispielsweise ein Abschnitt mit einem oder mehreren ausgewählten Bauelement-Anschlusskontakten erfasst.

Die beschriebene erneute Bauelementabtastung kann ferner beispielsweise dann erforderlich sein, wenn die vorherige Bauelementabtastung bezogen auf die Bauelement-Anschlüsse zu einem Koplanaritätswert führt, der außerhalb eines vorgegebene Toleranzbereiches liegt. In diesem Fall ist es häufig möglich, vor einem eventuell erforderlichen Verwerfen des betreffenden Bauelements die vermeintlich mangelhafte Koplanarität noch einmal zu überprüfen und das Bauelement erst dann zu verwerfen, wenn auch die weitere Bauelementabtastung einen nicht tolerierbaren Koplanaritätswert ergibt.

Das beschriebene Verfahren hat den Vorteil, dass durch eine wiederholte Abtastung die Datenqualität erheblich verbessert werden kann. Auf diese Weise werden für eine nachfolgende Datenauswertung bzw. Bildverarbeitung der aufgenommenen Messlichtsignale im Hinblick auf eine zuverlässige Bauelementvermessung erheblich verbesserte Ausgangsbedingungen geschaffen.

Die Auswertung der dreidimensionalen Oberflächenstruktur basiert auf dem bekannten Prinzip der Triangulation. Dabei wird das zu vermessenden Objekt unter einem ersten Winkel beleuchtet und unter einen unterschiedlichen zweiten Winkel beobachtet. Abhängig von der Höhenposition des jeweiligen Oberflächenpunktes erscheint der entsprechende Lichtreflex auf einem Lichtdetektor an einer unterschiedlichen Stelle. Der Winkel zwischen dem Beleuchtungslichtstrahl und dem Messlichtstrahl wird als Triangulationswinkel bezeichnet.

Dieser bestimmt die Höhenauflösung der dreidimensionalen Vermessung.

Das Beleuchtungslicht kann beispielsweise von einem Laser emittiert werden, so dass auf einfache Weise ein besonders kleiner Fokusdurchmesser des Beleuchtungslichts und damit eine hohe Ortsauflösung der gesamten Oberflächenvermessung realisiert werden kann. Im Falle der Abtastung mit einem zumindest annähernd punktförmigen Beleuchtungslichtfleck kann als Lichtdetektor vorzugsweise ein eindimensionaler Zeilendetektor verwendet werden. Dieser kann derart orientiert sein, dass Lichtreflexe von verschiedenen Höhenpositionen der jeweils abgetasteten Bauelement-Oberfläche an unterschiedlichen Positionen auf dem Zeilensensor abgebildet werden. Somit kann bei einer Kenntnis der Geometrie der verwendeten Sensorvorrichtung, welche die Laserlichtquelle, den Zeilensensor und eine Haltevorrichtung für das zu vermessende Bauelement aufweist, durch eine einfache Auswertung der Position des Lichtreflexes auf der Detektorzeile unmittelbar die Höhenposition des gerade abgetasteten Oberflächenpunktes bestimmt werden.

Es wird darauf hingewiesen, dass zur Abbildung des Lichtreflexes auf den Detektor selbstverständlich geeignete Abbildungsoptiken verwendet werden können, welche bevorzugt an die jeweiligen Abbildungsverhältnisse angepasst sind.

Das beschriebene Verfahren ermöglicht auf besonders zuverlässige Weise eine Überprüfung der Koplanarität von Bauelementanschlüssen. Dabei kann z.B. ermittelt werden, ob sich die entsprechenden Kontaktflächen mehrerer Bauelementanschlüsse eines Bauelements in einer Ebene befinden. Ist dies der Fall, dann befinden sich alle Bauelementanschlüsse nach einem erfolgreichen Bestückungsvorgang in einer Leiterplattenebene und können zuverlässig beispielsweise im Rahmen eines Lötvorgangs kontaktiert werden.

Die Bauelementanschlüsse können beispielsweise als Drähte oder als metallischen Kontaktpunkte oder Kontaktkugeln ausgebildet sein. Die entsprechenden Kontaktflächen der Bauelementanschlüsse können z.B. zur Kontaktierung des Bauelements an einem Bauelementträger, beispielsweise eine gedruckte Schaltungsplatine, vorgesehen sein.

Gemäß einem Ausführungsbeispiel der Erfindung nach Anspruch 2 weist das Verfahren zusätzlich auf ein Drehen des elektronischen Bauelements, wobei das Drehen nach dem Abtasten und vor dem erneuten Abtasten durchgeführt wird.

Das Drehen erfolgt dabei bevorzugt mittels einer Bauelement-Haltevorrichtung, welche in bekannter Weise an einem Bestückkopf eines Bestückautomaten angebracht sein kann und welche zur temporären Aufnahme von zu bestückenden Bauelementen insbesondere durch ein pneumatisches Ansaugen vorgesehen ist. Die Bauelement-Haltevorrichtung kann dafür in bekannter Weise um ihre Längsachse gedreht werden. In diesem Fall erfolgt im Rahmen des erneuten Abtastens eine Vermessung des Bauelements unter einem veränderten Präsentationswinkel. Der Präsentationswinkel ist dabei unabhängig von der relativen Bewegungsrichtung zwischen dem Bauelement und dem Beleuchtungslicht.

Es wird darauf hingewiesen, dass andere Präsentationswinkel auch dadurch realisiert werden können, dass bei einem fest orientierten Bauelement die Beleuchtungsrichtung geändert wird. Dies kann beispielsweise durch Aktivieren einer zweiten Lichtquelle, welche eine Laserdiode sein kann, erfolgen.

Gemäß einem weiteren Ausführungsbeispiel der Erfindung nach Anspruch 3 wird das elektronische Bauelement um einen Winkel von 180 Grad gedreht. Dies bedeutet, dass in Bezug auf eine Oberflächennormale des zu vermessenden Bauelements der Strahlengang des Beleuchtungsstrahls entlang des ersten Winkels symmetrisch zu dem Strahlengang des Beleuchtungsstrahls entlang des zweiten Winkels verläuft. Anders ausgedrückt bedeutet dies, dass, sofern das von einer Haltevorrichtung aufgenommene Bauelement während des ersten Abtastvorgangs aus Sicht des Bauelements von unten links beleuchtet wird, das Bauelement während des zweiten Abtastvorgangs aus Sicht des Bauelements von unten rechts beleuchtet wird. Somit wird das Bauelement im Verlauf des erneuten Abtastvorgangs aus einer anderen Richtung beleuchtet, so dass insgesamt die Wahrscheinlichkeit für eine erfolgreiche Bauelementvermessung besonders hoch ist.

Gemäß Anspruch 4 trifft das Beleuchtungslicht in Bezug auf eine Oberflächennormale des elektronischen Bauelements unter einem schrägen Winkel auf das Bauelement. Dies hat den Vorteil, dass das zu vermessende Bauelement unter einem schrägen Winkel beleuchtet wird, so dass auf einfache Weise durch eine entsprechende Anordnung des Lichtdetektors direkte Lichtreflexe und damit einer ungewollte Überblendung des Lichtdetektors vermieden werden können.

Durch die schräge Beleuchtung ergibt sich hinsichtlich der Vermessung der Oberflächenstruktur eine gewisse Asymmetrie. Dies bedeutet, dass das zu vermessende Bauelement während der ersten Abtastbewegung lediglich aus einer bestimmten Richtung beleuchtet wird, so dass manche Oberflächenerhebungen des zu vermessenden Bauelements durch die erste Abtastbewegung allein nicht zuverlässig ermittelt werden können. In diesem Fall bietet jedoch die zweite Abtastbewegung, bei der das zu vermessende Bauelement dem Beleuchtungslicht unter einem anderen Winkel präsentiert wird, gute Chancen, die zuvor nicht oder nicht eindeutig erkannte Oberflächenerhebung korrekt zu vermessen.

Gemäß Anspruch 5 verlässt in Bezug auf die Oberflächennormale des Bauelements das Messlicht die Bauelementoberfläche auf derselben Seite wie das Beleuchtungslicht auf die Bauelement-oberfläche trifft. Dies kann auf einfache Weise dadurch erreicht werden, dass die Lichtquelle des Beleuchtungslichts und der Lichtdetektor für das Messlicht auf einer Seite der genannten Oberflächennormalen angeordnet sind. Die Lichtquelle und der Lichtdetektor können dabei in Bezug auf die Oberflächennormale auf einer Seite beispielsweise derart angeordnet sein, dass die durch den Laser und die Oberflächennormale aufgespannte "Einfallsebene" und die durch die Kamera und die Oberflächennormale aufgespannte "Ausfallsebene" zueinander einen Winkel aufspannen, der kleiner oder gleich 90° ist. Zur weiteren Verminderung der Wahrscheinlichkeit von Reflexen in die Kamera kann dieser Winkel auch kleiner oder gleich 45° gewählt sein.

Dadurch, dass Laser und Kamera auf einer Seite der genannten Oberflächennormalen angeordnet sind, wird die Gefahr vermindert, dass vom Kontaktbereich des Bauelementanschlusses ein spiegelnder Reflex des ausgesandten Laserlichts in die Kamera reflektiert wird. Diese Aussage trifft zumindest für alle gängigen Bauelementanschluss-Formen zu. Solche Bauelementanschlüsse können beispielsweise im Bereich der Kontaktfläche eben sein, wie zum Beispiel bei so genannten "Gullwing-Leads". Die Kontaktflächen können aber auch gekrümmt ausgebildet sein. Insbesondere können die Bauelementanschlüsse im Wesentlichen die Form von Kugeln oder von Kugelbereichen (z.B. Halbkugeln oder Viertelkugeln) haben, so dass die Kontaktbereiche die Form eines Kugelabschnitts haben. Dies ist z.B. bei so genannten Ball Grid Arrays (BGA) der Fall.

Es wird darauf hingewiesen, dass innerhalb der vorliegenden Beschreibung von einer kugelförmigen Oberfläche auch dann die Rede ist, wenn die Oberflächen lediglich die Form von Kugelabschnittsoberflächen aufweisen. Zudem sind mit dem Wort "kugelförmig" nicht nur streng geometrische Kugelformen sondern auch kugelähnliche Formen (z.B. ellipsenartige Formen) gemeint.

Gemäß Anspruch 6 verlässt das von der Kamera erfasste Messlicht die Bauelementoberfläche im Wesentlichen parallel zu der Oberflächennormale des elektronischen Bauelements. Dies hat den Vorteil, dass der Lichtdetektor innerhalb einer gesamten optischen Sensorvorrichtung zum dreidimensionalen Vermessen von Bauelementen derart angeordnet werden kann, dass der Strahlengang des Messlichts exakt senkrecht zu einer Referenzebene des zu vermessenden Bauelements verläuft. Bevorzugt ist die Referenzebene durch die Ebene der verschiedenen Bauelementanschlüsse definiert.

Gemäß Anspruch 7 weist das Verfahren zur Auswertung der dreidimensionalen Oberflächenstruktur eines elektronischen Bauelements zusätzlich auf (a) ein Auswerten der Oberflächenstruktur des Bauelements unter Verwendung von einer Mehrzahl von Messlichtsignalen, die von dem Lichtdetektor beim Aufnehmen des Messlichts erzeugt wurden und/oder (b) ein erneutes Auswerten der Oberflächenstruktur des Bauelements unter Verwendung von einer Mehrzahl von Messlichtsignalen, die von dem Lichtdetektor beim erneuten Aufnehmen des Messlichts erzeugt wurden.

Gemäß einem weiteren Ausführungsbeispiel der Erfindung nach Anspruch 8 wird, falls die Auswertung zu keinem eindeutigen Ergebnis führt, der Abstand zwischen dem Bauelement und der Lichtquelle bzw. dem Lichtdetektor variiert. Dies hat den Vorteil, dass die im Verlauf der ersten Abtastbewegung gewonnenen Messergebisse, die für eine zuverlässige Bauelementvermessung nicht ausreichen, zumindest für eine grobe Abschätzung der Höhenposition des Bauelements innerhalb der optischen Sensorvorrichtung verwendet werden können. Die Richtung der Variation der Höhenposition bzw. der Präsentationsebene des Bauelements kann sich beispielsweise aus zumindest einigen richtig erkannten Oberflächenstrukturen des Bauelements ergeben, die trotz einer Fehlmessung innerhalb des entsprechend aufgenommen Messergebnisses zu erkennen sind.

Gemäß Anspruch 9 weist das Verfahren zusätzlich auf ein Abtasten eines weiteren elektronischen Bauelements durch eine Relativbewegung zwischen dem weiteren Bauelement und dem Beleuchtungslicht. Dabei wird vor dem Abtasten der Abstand zwischen dem weiteren Bauelement und der Lichtquelle bzw. dem Lichtdetektor basierend auf einer Abstandsinformation optimiert, die im Rahmen des Auswertens und/oder des erneuten Auswertens der Oberflächenstruktur des vorherigen Bauelements gewonnen wurde.

Dies bedeutet, dass basierend auf Höhen- bzw. Abstandsinformationen, die in vorherigen Messungen für die jeweils vermessenen Bauelementseiten gewonnenen wurden, die Präsentationsebenen der nachfolgend zu vermessenen weiteren Bauelemente durch einen geeigneten Lernalgorithmus angepasst bzw. optimiert werden können. Dies ist insbesondere dann von Vorteil, wenn nach einem Chargenwechsel weitere Bauelemente vermessen werden, welche im Vergleich zu der vorherigen Bauelementcharge eine etwas andere mittlere Bauelementhöhe aufweisen. In diesem Fall befindet sich die üblicherweise zu vermessende Bauelement-Unterseite in Bezug zu einer Bauelement-Haltevorrichtung bzw. in Bezug zu einem entsprechenden Bestückkopf in einer unterschiedlichen Höhenlage, so dass sich die zu vermessenden Anschlüsse des Bauelements zunächst außerhalb des Fokusbereiches des Beleuchtungslichts liegen. Bei einem derartigen Chargenwechsel kann somit auf elegante und effiziente Weise basierend auf einem geeigneten Lernalgorithmus die Präsentationsebene des weiteren Bauelements nachgefahren werden, so dass bereits nach wenigen Bestückvorgängen, die jeweils eine Bauelementvermessung umfassen, die Bauelementanschlüsse wieder nahe der Fokusebene des Beleuchtungslichts abgetastet werden können. Somit kann die Koplanarität der Bauelementanschlüsse mit einer besonders hohen Genauigkeit vermessen werden.

Gemäß Anspruch 10 weist das Verfahren zusätzlich auf ein Abtasten eines weiteren elektronischen Bauelements durch eine Relativbewegung zwischen dem weiteren Bauelement und dem Beleuchtungslicht. Dabei wird vor dem Abtasten das weitere Bauelement basierend auf einer Information über einen geeigneten Präsentationswinkel gedreht. Diese Information wurde zuvor im Rahmen des Auswertens und/oder des erneuten Auswertens der Oberflächenstruktur des vorherigen Bauelements gewonnen.

Unter dem Begriff Präsentationswinkel ist in diesem Zusammenhang ein Winkel zu verstehen, den die optische Achse des Beleuchtungslichts mit einer ausgewählten Richtung eines Koordinatensystems einschließt, welches mit dem zu vermessenden Bauelement assoziiert ist. Die ausgewählte Richtung kann beispielsweise durch eine Kante des zu vermessenden Bauelements definiert sein.

Dies bedeutet, dass im Rahmen eines Lernalgorithmus Informationen über geeignete Präsentationswinkel der zu vermessenden Bauelemente, welche Informationen bei vorhergehenden Vermessungen und ggf. erforderlichen Korrekturen der Präsentationswinkel gewonnen wurden, für nachfolgende Bauelemente verwendet werden. Ein derartiges Lernen von geeigneten Präsentationswinkeln der zu vermessenden Bauelemente in Bezug auf den Strahlengang des Beleuchtungslichts kann insbesondere dann zu schnelleren und präziseren Vermessungsergebnissen führen, wenn die zu vermessenden Bauelemente keine quadratische sondern eine rechteckige Gehäuseform aufweisen. Solche Gehäuse sind beispielsweise sog. Small Outline (SO)-Gehäuse, welche an den beiden längeren Außenseiten Bauelementanschlüsse aufweisen. Dabei können die an beiden länglichen Außenseiten angebrachten Bauelementanschlüsse hinsichtlich ihrer Anzahl und/oder ihrer Form gleich oder ungleich sein. Durch ein effizientes Optimieren des Präsentationswinkels können auf vorteilhafte Weise unerwünschte Störreflexe eliminiert oder zumindest in ihrer Intensität reduziert werden.

Es wird darauf hingewiesen, dass es auch möglich ist, vor einem erneuten Abtasten unter einem geänderten Präsentationswinkel mittels geeigneten Simulationen zu prüfen, ob mit einer geplanten Änderung des Präsentationswinkels überhaupt bessere Vermessungsergebnisse erwartet werden können. Dies kann anhand von geeigneten Vergleichmetriken erfolgen. Eine Vergleichsmetrik kann einen Qualitätswert wie beispielsweise die Anzahl an richtig vermessenen Bauelementanschlüssen und/oder einen Parameter umfassen, welcher die Anzahl an erfolgreichen Bauelementvermessungen beschreibt. Durch eine geeignete Analyse einer derartigen Vergleichsmetrik kann der Präsentationswinkel des Bauelements dann entsprechend angepasst werden.

Gemäß Anspruch 11 ist das Beleuchtungslicht ein entlang einer Richtung aufgeweiteter Lichtstrahl, so dass auf eine Seite des elektronischen Bauelements eine Lichtzeile projiziert wird. Als Lichtdetektor wird in diesem Fall ein Flächendetektor verwendet.

Das eindimensionale Aufweiten des Beleuchtungslichts Lichtstrahls entlang einer Richtung kann auf besonders vorteilhafte Weise dadurch realisiert werden, dass ein Lichtbündel mit einer geringen Divergenz, beispielsweise ein Laserstrahl, auf eine Zylinderlinse gerichtet wird. Auf der zu vermessenden Oberfläche des Bauelements entsteht somit ein linienförmiger Beleuchtungsstreifen.

Diese Ausgestaltung hat den Vorteil, dass zum Abtasten von relevanten Kontaktflächen von Bauelementanschlüssen im Allgemeinen nur eine eindimensionale Bewegung notwendig ist. Dadurch wird der Aufwand und die Zeit zur Aufnahme der Daten reduziert, die zur Lagebestimmung der Bauelementanschlüsse verwendet werden.

Als Lichtdetektor bzw. lichtempfindlicher Sensor kann beispielsweise eine Matrix- oder Flächenkamera vorgesehen sein. Zur effizienten Aufnahme der Bilddaten kann die Relativbewegung zwischen Bauelement und Beleuchtungslicht senkrecht zur Längsausdehnung der Lichtzeile erfolgen. Damit kann durch eine lediglich eindimensionale Relativbewegung ein flächiger Bereich des Bauelements vermessen werden.

Gemäß Anspruch 12 erfolgt das Abtasten und/oder das erneute Abtasten durch eine Bewegung des Bauelements relativ zu dem Strahlengang des Beleuchtungslichts. Diese Bewegung ist bevorzugt eine lineare Bewegung mit einer Geschwindigkeit von beispielsweise 200 mm/s. Um eine hohe Datenrate zu erhalten, sollte diese Bewegung mit möglichst vielen Messlichtsignalen erfasst werden. In der Praxis hat es sich als vorteilhaft herausgestellt, wenn als Lichtdetektor eine Kamera verwendet wird, die in der Lage ist 10.000 Bilder pro Sekunde aufzunehmen.

Es wird darauf hingewiesen, dass die Bewegungsrichtung des Bauelements während der Abtastbewegung nicht zwangsläufig die gleiche sein muss wie die Bewegungsrichtung während der erneuten Abtastbewegung. Bevorzugt sind diese beiden Bewegungsrichtungen antiparallel zueinander orientiert, so dass das erneute Abtasten während einer einfachen Rückwärtsbewegung des Bauelements erfolgt.

Mit dem Anspruch 13 wird eine Vorrichtung zum optischen Vermessen der dreidimensionalen Oberflächenstruktur eines elektronischen Bauelements beschrieben, welche insbesondere zum Vermessen der Koplanarität von Bauelementanschlüssen geeignet ist. Die beschrieben Vorrichtung weist auf (a) eine Lichtquelle, eingerichtet zum Aussenden von Beleuchtungslicht in Richtung des elektronischen Bauelements, (b) einen Lichtdetektor, eingerichtet zum Aufnehmen eines Messlichts, welches von dem Bauelement zumindest teilweise zurückgestreut wird, und (c) einen Prozessor. Der Prozessor ist derart eingerichtet, dass das oben genannte Verfahren zum optischen Vermessen der dreidimensionalen Oberflächenstruktur eines elektronischen Bauelements durchführbar ist.

Gemäß einem Ausführungsbeispiel der Erfindung nach Anspruch 14 weist die Vorrichtung zusätzlich eine Dreheinrichtung auf, welche zum Drehen des elektronischen Bauelements eingerichtet ist. Damit kann das oben beschriebene Verfahren zum Beispiel auch mit bzw. in einer autarken Maschine durchgeführt werden, die beispielsweise in einer Fertigungslinie zum Zwecke einer Qualitätssicherung aufgestellt sein kann.

Mit dem Anspruch 15 wird ein Bestückautomat zum Bestücken von Leiterplatten mit elektronischen Bauelementen beschrieben. Der Bestückautomat weist eine Vorrichtung des oben beschriebenen Typs zum optischen Auswerten der dreidimensionalen Oberflächenstruktur eines elektronischen Bauelements auf.

Mit dem Anspruch 16 wird ein Computerlesbares Speichermedium geschaffen, in dem ein Programm zum optischen Auswerten der dreidimensionalen Oberflächenstruktur eines elektronischen Bauelements gespeichert ist. Wenn das Programm von einem Prozessor ausgeführt wird, kann das oben beschriebene Verfahren zum optischen Auswerten der dreidimensionalen Oberflächenstruktur eines elektronischen Bauelements durchgeführt werden.

Mit dem Anspruch 17 wird ein Programm-Element zum optischen Auswerten der dreidimensionalen Oberflächenstruktur eines elektronischen Bauelements geschaffen. Wenn das Programm von einem Prozessor ausgeführt wird, kann das oben beschriebene Verfahren zum optischen Auswerten der dreidimensionalen Oberflächenstruktur eines elektronischen Bauelements durchgeführt werden.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.
- Figur 1a: zeigt das Abtasten der Anschlüsse eines elektronischen Bauelements mittels eines aufgefächerten Beleuchtungsstrahls und das Erfassen eines zurück gestreuten Messlichts mittels einer Kamera.
- Figur 1b: zeigt ein zweidimensionales Messsignal, welches bei der in Figur 1a dargestellten Vermessung von Bauelement-Anschlusskugeln bei einer bestimmten relativen Lage zwischen Bauelement und Beleuchtungsstrahl von der Kamera aufgenommen wird.
- Figur 2: zeigt ein Ablaufdiagramm für eine optische Vermessung der dreidimensionalen Oberflächenstruktur eines elektronischen Bauelements, wobei im Falle einer Fehlmessung das Bauelement erneut unter einem anderen Präsentationswinkel abgetastet wird.

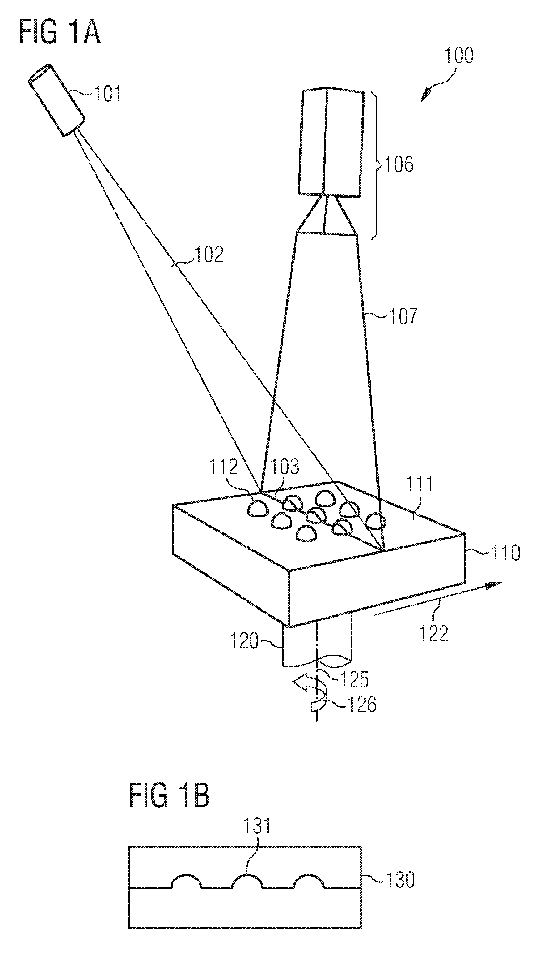

Figur 1a zeigt eine optische Sensorvorrichtung 100, mit der die Oberflächenstruktur eines elektronischen Bauelements 110 in drei Dimensionen erfasst werden kann. Die optische Sensorvorrichtung 100 beruht auf dem bekannten Prinzip der Triangulation. Dabei wird ein von einer Lichtquelle 101 ausgesandtes Beleuchtungslicht 102 auf die zu vermessende Oberflächenstruktur 111 gerichtet. Gemäß dem hier dargestellten Ausführungsbeispiel ist die zu vermessende Oberflächenstruktur die Unterseite 111 eines elektronischen Bauelements 110, welches von einer als Saugpipette ausgebildeten Bauelement-Haltevorrichtung 120 gehalten wird. An der Unterseite 111 des Bauelements 110 befinden sich als Anschlusskugeln ausgebildete elektrische Anschlüsse 112 des Bauelements 110.

Wie aus Figur 1a ersichtlich, wird das von der Laserdiode 101 ausgesandte Beleuchtungslicht 102 derart aufgeweitet, dass es in Form eine Lichtzeile 103 auf die Oberflächenstruktur 111 projiziert wird. Das Aufweiten kann durch eine nicht dargestellte Zylinderlinse erfolgen.

Das von der Oberflächenstruktur 111 zumindest teilweise gestreute Licht wird als Messlicht 107 von einem Lichtdetektor 106 erfasst. Gemäß dem hier dargestellten Ausführungsbeispiel ist der Lichtdetektor eine Kamera 106, welche den erzeugten Lichtreflex innerhalb eines zweidimensionalen Bildes aufnehmen kann.

Figur 1b zeigt ein Kamerabild 130, welches bei der dargestellten Oberflächenstruktur 111 aufgenommen wird. Die durch die Lichtzeile 103 beleuchteten Erhebungen innerhalb der Oberflächenstruktur 111 führen bei der vorliegenden Geometrie der Sensorvorrichtung 100 dazu, dass das aufgenommene zweidimensionale Messlichtsignal 131 Höcker aufweist. Dabei ist jeweils einer Bauelement-Anschlusskugel ein Höcker zugeordnet. Die Höhe des Höckers ist ein direktes Maß für die Höhe der jeweiligen Anschlusskugel.

Eine vollständige dreidimensionale Vermessung der Oberflächenstruktur 111 wird gemäß dem hier dargestellten Ausführungsbeispiel dadurch erreicht, dass das Bauelement 110 relativ zu dem Strahlengang des Beleuchtungslichts 102 entlang einer Verschieberichtung 122 bewegt wird. Auf diese Weise werden sequentiell alle Oberflächenbereiche der zu vermessenden Bauelement-Unterseite 111 abgetastet. Durch eine entsprechende Auswertung der dabei erfassten Sequenz von zweidimensionalen Messlichtsignalen 131 kann die gesamte dreidimensionale Oberflächenstruktur 111 und damit die Form und die Höhe jeder einzelnen Anschlusskugeln ermittelt werden.

Wie aus Figur 1a ersichtlich, weist der optische Aufbau der Sensorvorrichtung 100 eine gewisse Asymmetrie auf. Diese entsteht dadurch, dass die Beleuchtung des Bauelements unter einem schrägen Winkel in Bezug zur Flächennormalen der zu vermessenden Oberflächenstruktur 111 erfolgt. Die Messung des an der Oberflächenstruktur 111 gestreuten Lichts erfolgt zumindest annähernd parallel zu der Flächennormalen. Diese Asymmetrie hat zur Folge, dass manche Strukturen der Unterseite 111 beispielsweise infolge einer zumindest teilweisen Abschattung durch Erhebungen nicht oder nicht deutlich erkannt werden können.

Gemäß dem hier dargestellten Ausführungsbeispiel der Erfindung ist nun vorgesehen, im Falle einer Fehlmessung infolge von nicht erkannten Oberflächenstrukturen eine erneute Messung durchzuführen, bei der die Oberflächenstruktur 111 des Bauelements 110 erneut durch das Beleuchtungslicht 102 abgetastet wird. Dabei wird jedoch ein anderer Präsentationswinkel eingestellt, so dass die Oberflächenstruktur 111 des Bauelements 110 effektiv aus einer anderen Richtung beleuchtet wird. Die Änderung des Präsentationswinkels wird dadurch erreicht, dass die Haltevorrichtung 120, von der das Bauelement 110 aufgenommen ist, um ihre Längsachse 125 gedreht wird. Um die Beleuchtungsbedingungen im Vergleich zu einer vorhergehenden Fehlmessung deutlich zu ändern, wird das Bauelement 110 bevorzugt um einen Winkel von 180° gedreht. Die entsprechende Drehbewegung ist in Figur 1a durch den Pfeil mit dem Bezugszeichen 126 verdeutlicht.

Durch die beschriebene erneute Abtastung des Bauelements 110 unter einem anderen Präsentationswinkel besteht die realistische Chance, dass damit Messdaten gewonnen werden, die eine korrekte Erkennung von bisher nicht erkannten Strukturen auf der Unterseite des Bauelements 110 ermöglichen.

Bei der erneuten Messung kann das Bauelement grundsätzlich entlang beliebiger Richtungen relativ zu dem Strahlengang des Beleuchtungslichts 102 bewegt werden. Bevorzugt wird das Bauelement 110 im Verlauf dieses erneuten Abtastvorgangs entweder entlang der gleichen Verschieberichtung 122 oder in entgegen gesetzter Richtung bewegt. Dies hat den Vorteil, dass für die erneute Messung kein zusätzlicher Platz benötigt wird.

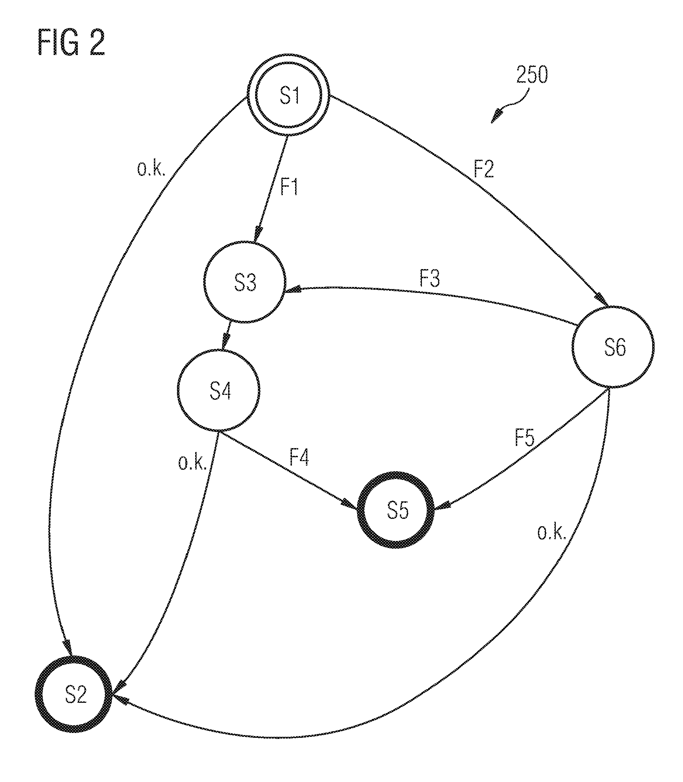

In Figur 2 ist ein Ablaufdiagramm 250 dargestellt, welches abhängig von verschiedenen Fehlern bei der Vermessung bzw. bei der Charakterisierung eines Bauelements bevorzugte Verfahrensschritte anzeigt, die im Rahmen eines Bestückungsvorgangs ausgeführt werden. Folgende Arten von Fehlen können auftreten:
- E0:: Das gesamte Bauelement wird im aufgenommenen Kamerabild nicht gefunden
- E1:: Einzelne Bauelementanschlüsse werden im Kamerabild nicht gefunden
- E2:: Einzelne Bauelementanschlüsse werden mit schlechter Qualität im Kamerabild gefunden
- E3:: Die Bauelementanschlüsse verletzen einen erforderlichen Koplanaritätswert
- E4:: Das Bauelement befindet sich zu nahe an der Sensorvorrichtung
- E5:: Das Bauelement ist zu weit weg von der Sensorvorrichtung
- E6:: Es wurden gültige Anschlusshöhen sowohl an der oberen als auch an der unteren Messbereichsgrenze gefunden.

Es wird darauf hingewiesen, dass die Fehler E4, E5 und E6 auch dadurch auftreten können, dass bei sog. Gull Wings statt der Aufsetzfläche der Bauelemente fälschlicherweise ein Teilabschnitt des Anschlusses gemessen wird, der unmittelbar aus dem Körper des Bauelements hinausragt.

Wie aus dem Ablaufdiagramm 250 ersichtlich, wird in einem ersten Schritt S1 das zu vermessenden Bauelement beispielsweise mittels der in Figur 1a dargestellten Sensorvorrichtung 100 erstmalig abgetastet. Sollte basierend auf den dabei aufgenommenen Messdaten bereits eine eindeutige und fehlerfreie Vermessung der Oberflächenstruktur bzw. der Koplanarität der Bauelementanschlüsse möglich sein und sollte sich dabei herausstellen, dass das Bauelement den Anforderungen für eine einwandfreie Bestückung genügt, dann wird dieses Bauelement in einem Schritt S2 bestückt.

Sollte das erstmalige Abtasten bzw. Scannen des Bauelements zu keinem verwertbaren Ergebnis führen, dann wird zunächst versucht, die Höhe des vermessenen Bauelements innerhalb der Sensorvorrichtung bzw. den Abstand des Bauelements von der Sensorvorrichtung zu bestimmen. Somit gibt es im Falle einer fehlerhaften Bauelementvermessung zwei unterschiedliche Fehlermöglichkeiten.

Bei einem Fehler F1 ist eine Höhenberechnung des Bauelements relativ zu der Sensorvorrichtung möglich. Dieser Fall kommt insbesondere bei dem Auftreten von zumindest einem der oben beschriebenen Fehler E1, E2, E3, E4 und E5 vor.

Bei einem Fehler F2 ist eine Höhenberechnung nicht möglich. Dieser Fall kann zusätzlich zu den oben beschriebenen Fehlern E1, E2, E3, E4 und E5 auch dann vorkommen, wenn das Bauelement im aufgenommenen Kamerabild überhaupt nicht gefunden wird (Fehler E0) oder wenn gültige Anschlusshöhen sowohl an der oberen als auch an der unteren Messbereichsgrenze gefunden wurden (Fehler E6).

Im Falle des Auftretens des Fehlers F1 folgt gemäß dem hier dargestellten Ausführungsbeispiel in einem Schritt S3 eine Höhenanpassung. Dabei wird der Abstand zwischen dem Bauelement und der Sensorvorrichtung so eingestellt, dass sich die zu vermessende Unterseite des Bauelements möglichst in der Fokusebene befindet.

Unmittelbar nach der Höhenanpassung erfolgt in einem Schritt S4 ein erneutes Abtasten des Bauelements unter einem geänderten Präsentationswinkel. Dieser wird gemäß dem hier dargestellten Ausführungsbeispiel vor dem eigentlichen Abtastvorgang dadurch eingestellt, dass das von einer Bauelement-Haltevorrichtung aufgenommene Bauelement um einen Winkel von 180° um die Längsachse der Haltevorrichtung gedreht wird.

Sollte sich bei dem erneuten Abtastvorgang S4 eine fehlerfreie Bauelementvermessung ergeben, dann wird das Bauelement in dem Schritt S2 bestückt. Dies umfasst in bekannter Weise ein Aufsetzen des Bauelements an eine durch vorgegebene Anschlussflächen definierten Bauelement-Einbauplatz auf einer Leiterplatte.

Sollte auch die Messung S4 zu keiner fehlerfreien Bauelementvermessung führen, weil beispielsweise zumindest einer der oben beschriebenen Fehler E0, E1, E2, E3, E4, E5 und E6 auftritt, dann wird das Bauelement als fehlerhaft eingestuft und durch ein Abwerfen (Schritt S5) aus dem Bestückungsprozess entfernt.

Im Falle des Auftretens des Fehlers F2 folgt gemäß dem hier dargestellten Ausführungsbeispiel in einem Schritt S6 ein erneutes Abtasten des Bauelements unter einem geänderten Präsentationswinkel. Auch in diesem Fall wird der Präsentationswinkel durch ein Drehen des Bauelements um einen Winkel von 180° um die Längsachse der Haltevorrichtung variiert.

Sollte der erneute Abtastvorgang S6 eine fehlerfreie Bauelementvermessung ergeben, dann wird das Bauelement in dem Schritt S2 bestückt.

Bei dem Abtastvorgang S6 kann jedoch auch ein Fehler F3 auftreten. Dieser zeichnet sich dadurch aus, dass, obwohl beispielsweise infolge des Auftretens eines der Fehler E1, E2, E3, E4 oder E5 wiederum keine korrekte Bauelementvermessung möglich ist, die nicht optimale Höhelage des Bauelements erkannt werden kann. Die daraus gewonnene Höheninformation wird dazu genutzt, dass in dem zuvor bereits beschriebenen Schritt S3 die Höhenlage des Bauelements relativ zu der Sensorvorrichtung derart optimiert wird, dass sich die zu vermessende Bauelement-Unterseite in der Fokusebene der Sensorvorrichtung befindet. Nach der Höhenanpassung S3 folgt der bereits oben beschriebene erneute Abtastvorgang bei optimierter Höhenlage (Schritt S4), welchem entweder ein Bestückungsvorgang (Schritt S2) oder ein Abwerfen des Bauelements (Schritt S5) folgt.

Bei dem Abtastvorgang S6 kann ferner ein Fehler F5 auftreten. Dieser zeichnet sich dadurch aus, dass, weder eine Bauelementvermessung noch eine Erkennung der Höhenlage des Bauelements möglich ist. Die Bauelementvermessung kann deshalb fehlschlagen, weil zumindest einer der o. g. Fehler E0, E1, E2, E3, E4, E5 und E6 aufgetreten ist. In diesem Fall wird der Bestückprozess mit dem Schritt S5 durch ein Abwerfen des betreffenden Bauelements beendet.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

## Patentansprüche

1. Verfahren zur optischen Auswertung der dreidimensionalen Oberflächenstruktur (111) eines elektronischen Bauelements (110), insbesondere zum Vermessen der Koplanarität von Bauelementanschlüssen (112), das Verfahren aufweisend
• Aussenden eines von einer Lichtquelle (101) erzeugten Beleuchtungslichts (102) in Richtung des elektronischen Bauelements (110),
• Abtasten des elektronischen Bauelements (110) durch eine Relativbewegung (122) zwischen dem Bauelement (110) und dem Beleuchtungslicht (102), wobei das Bauelement (110) unter einem ersten Winkel beleuchtet wird und wobei ein Messlicht (107) aufgenommen wird, welches von dem Bauelement (110) zumindest teilweise auf einen Lichtdetektor (106) zurückgestreut wird, und
• erneutes Abtasten des elektronischen Bauelements (110) durch eine erneute Relativbewegung (122) zwischen dem Bauelement (110) und dem Beleuchtungslicht (102), wobei das Bauelement (110) unter einem zweiten Winkel beleuchtet wird, welcher unterschiedlich zu dem ersten Winkel ist, und
wobei erneut ein Messlicht (107) aufgenommen wird, welches von dem Bauelement (110) zumindest teilweise auf den Lichtdetektor (106) zurückgestreut wird.

2. Verfahren nach Anspruch 1, zusätzlich aufweisend
• Drehen (126) des elektronischen Bauelements (110),
wobei das Drehen (126) nach dem Abtasten und vor dem erneuten Abtasten durchgeführt wird.

3. Verfahren nach Anspruch 2, wobei
das elektronische Bauelement (110) um einen Winkel von 180 Grad gedreht wird.

4. Verfahren nach einem der Ansprüche 1 bis 3, wobei
das Beleuchtungslicht (102) in Bezug auf eine Oberflächennormale des elektronischen Bauelements (110) unter einem schrägen Winkel auf das Bauelement (110) trifft.

5. Verfahren nach Anspruch 4, wobei
in Bezug auf die Oberflächennormale des Bauelements (110) das Messlicht (107) die Bauelementoberfläche (111) auf derselben Seite verlässt wie das Beleuchtungslicht (102) auf die Bauelementoberfläche (111) trifft.

6. Verfahren nach Anspruch 4, wobei
das von der Kamera erfasste Messlicht (107) die Bauelement-oberfläche (111) im Wesentlichen parallel zu der Oberflächennormale des elektronischen Bauelements (110) verlässt.

7. Verfahren nach einem der Ansprüche 1 bis 6, zusätzlich aufweisend
• Auswerten der Oberflächenstruktur (111) des Bauelements (110) unter Verwendung von einer Mehrzahl von Messlichtsignalen (131), die von dem Lichtdetektor (106) beim Aufnehmen des Messlichts (107) erzeugt wurden und/oder
• erneutes Auswerten der Oberflächenstruktur (111) des Bauelements (110) unter Verwendung von einer Mehrzahl von Messlichtsignalen (131), die von dem Lichtdetektor (106) beim erneuten Aufnehmen des Messlichts (107) erzeugt wurden.

8. Verfahren nach Anspruch 7, zusätzlich aufweisend:
falls die das Auswerten und/oder das erneute Auswerten zu keinem eindeutigen Ergebnis führt,
• Variieren des Abstands zwischen dem Bauelement (110) und der Lichtquelle (101) bzw. dem Lichtdetektor (106).

9. Verfahren nach einem der Ansprüche 7 bis 8, zusätzlich aufweisend
* Abtasten eines weiteren elektronischen Bauelements (110) durch eine Relativbewegung (122) zwischen dem weiteren Bauelement (110) und dem Beleuchtungslicht (102), wobei vor dem Abtasten der Abstand zwischen dem weiteren Bauelement (110) und der Lichtquelle (101) bzw. dem Lichtdetektor (106) basierend auf einer Abstandsinformation optimiert wird, die im Rahmen des Auswertens und/oder des erneuten Auswertens der Oberflächenstruktur (111) des vorherigen Bauelements (110) gewonnen wurde.

10. Verfahren nach einem der Ansprüche 7 bis 9, zusätzlich aufweisend
• Abtasten eines weiteren elektronischen Bauelements (110) durch eine Relativbewegung (122) zwischen dem weiteren Bauelement (110) und dem Beleuchtungslicht (102), wobei vor dem Abtasten das weitere Bauelement (110) basierend auf einer Information über einen geeigneten Präsentationswinkel gedreht wird, welche Information im Rahmen des Auswertens und/oder des erneuten Auswertens der Oberflächenstruktur (111) des vorherigen Bauelements (110) gewonnen wurde.

11. Verfahren nach einem der Ansprüche 1 bis 10, wobei das Beleuchtungslicht ein entlang einer Richtung aufgeweiteter Lichtstrahl (102) ist, so dass auf eine Seite des elektronischen Bauelements (110) eine Lichtzeile (103) projiziert wird und
als Lichtdetektor ein Flächendetektor (106) verwendet wird.

12. Verfahren nach einem der Ansprüche 1 bis 11, wobei
das Abtasten und/oder das erneute Abtasten durch eine Bewegung (122) des Bauelements (110) relativ zu dem Strahlengang des Beleuchtungslichts (102) erfolgt.

13. Vorrichtung zum optischen Vermessen der dreidimensionalen Oberflächenstruktur (111) eines elektronischen Bauelements (110), insbesondere zum Vermessen der Koplanarität von Bauelementanschlüssen, die Vorrichtung aufweisend
• eine Lichtquelle (101), eingerichtet zum Aussenden von Beleuchtungslicht (102) in Richtung des elektronischen Bauelements (110),
• einen Lichtdetektor (106), eingerichtet zum Aufnehmen eines Messlichts (107), welches von dem Bauelement (110) zumindest teilweise zurückgestreut wird, und
• einem Prozessor, welcher derart eingerichtet ist, dass das Verfahren nach einem der Ansprüche 1 bis 12 durchführbar ist.

14. Vorrichtung nach Anspruch 13, zusätzlich aufweisend
• eine Dreheinrichtung, eingerichtet zum Drehen des elektronischen Bauelements.

15. Bestückautomat zum Bestücken von Leiterplatten mit Bauelementen, der Bestückautomat aufweisend
• eine Vorrichtung nach einem der Ansprüche 13 bis 14 zum optischen Auswerten der dreidimensionalen Oberflächenstruktur (111) eines elektronischen Bauelements (110).

16. Computerlesbares Speichermedium, in dem ein Programm zum optischen Auswerten der dreidimensionalen Oberflächenstruktur (111) eines elektronischen Bauelements (110) gespeichert ist, das, wenn es von einem Prozessor ausgeführt wird, zum Durchführen des Verfahrens nach einem der Ansprüche 1 bis 12 eingerichtet ist.

17. Programm-Element zum optischen Auswerten der dreidimensionalen Oberflächenstruktur (111) eines elektronischen Bauelements (110), das, wenn es von einem Prozessor ausgeführt wird, zum Durchführen des Verfahrens nach einem der Ansprüche 1 bis 12 eingerichtet ist.
